# EUROPEAN PATENT SPECIFICATION

(11) **EP 2 980 173 B1**
(45) Date of publication and mention of the grant of the patent: **13.06.2018**
(21) Application number: 14772696.2
(22) Date of filing: 13.03.2014
(51) Int. Cl.: C09D 201/00, B05D 5/06, C09C 1/64, C09C 3/08, C09D 7/12, C08K 3/08, C09D 133/02, C08K 3/22, C09C 1/00, C09D 5/38, C08K 9/12

(54) **SUBSURFACE CONCEALING PAINT AND PAINTED OBJECT**
UNTEROBERFLÄCHEN-VERBERGENDER LACK UND LACKIERTER GEGENSTAND
PEINTURE DE DISSIMULATION DE SOUS-SURFACE ET OBJET PEINT

(30) Priority: 26.03.2013 JP 2013064383
(43) Date of publication of application: 03.02.2016
(73) Proprietor: Toyo Aluminium Kabushiki Kaisha, Osaka-shi, Osaka 541-0056 (JP)
(72) Inventor: KUBO, Katsunobu, Osaka-shi Osaka 541-0056 (JP)
(74) Representative: Bockhorni & Kollegen
(86) International application number: PCT/JP2014/056727
(87) International publication number: WO 2014/156691

(56) References cited:
- WO-A1-2014/050893
- FR-A1- 2 664 160
- JP-A- H01 272 668
- JP-A- H09 132 514
- JP-A- 2007 177 240
- JP-A- 2008 088 317
- JP-A- 2012 201 745
- US-A- 5 912 283

## Description

### TECHNICAL FIELD

The present invention relates to a subsurface hiding paint and a painted article having a coating formed thereof.

### BACKGROUND ART

Conventionally, a base, an undercoating and the like have generally been hidden by applying thereon an undercoating paint with titanium oxide alone used as a pigment. When this undercoating paint is used, however, with titanic oxide having an insufficient hiding power, the undercoating paint is applied thick to increase the hiding power.

On the other hand, there is a demand nowadays for applying a thin coating for cost reduction, a countermeasure against VOC, and the like. Accordingly, Japanese Patent Laying-Open No. 08-164358 (PTD 1) and Japanese Patent Laying-Open No. 10-137677 (PTD 2) have proposed blending such an undercoating paint as described above with flaky aluminum in addition to titanium oxide for enhanced hiding power. Such an approach, however, does not necessarily provide sufficient hiding power and there is a need for further enhanced hiding power.

### CITATION LIST

### PATENT DOCUMENTS

PTD 1: Japanese Patent Laying-Open No. 08-164358
PTD 2: Japanese Patent Laying-Open No. 10-137677

Furthermore, from WO 2014/050893 and EP 2 902 450 A1 a colored metallic pigment is known which contains a metallic pigment, a coloring pigment, a first compound and a second compound. The coloring pigment adheres to the surface of the metallic pigment in the coexistence of the first compound and the second compound, the first compound is a compound having two or more carboxyl groups, and the second compound is a compound having one or more amino groups.

From FR 2 664 160 A1 a cosmetic is known which comprises a base colouring agent composed of aluminium particles coated with pigment particles which comprise at least some white inorganic pigments and which are bound to the aluminium particles by a bonding agent. The base colouring agent is produced by drying a paste of the constituent particles and of bonding agent with a dispersion medium. The base colouring agent can, in addition, be treated with a water-repellent agent.

### SUMMARY OF INVENTION

### TECHNICAL PROBLEM

The present invention has been made under the current circumstances as described above, and contemplates a subsurface hiding paint having excellent hiding power.

### SOLUTION TO PROBLEM

The present inventor has diligently studied to solve the above issue and found that a paint having titanium oxide and flaky aluminum individually blended, as done for conventional undercoating paints, has a limit in increasing its hiding power simply by blending the components in increased amounts or the like, and accordingly, the present inventor has further studied from a completely different point of view and thus accomplished the present invention.

More specifically, the present invention provides a subsurface hiding paint comprising a composite white pigment and resin, the composite white pigment including a flaky base material and a first white pigment adhering to the surface of the flaky base material, the flaky base material being configured of any of a metal, a metal-covered material and a carbon material, the first white pigment being particulate. The first white pigment adheres to the surface of the flaky base material in the coexistence of a first compound and a second compound, and that the first compound be a compound having two or more carboxyl groups and the second compound be a compound having one or more amino groups. The subsurface hiding paint contains 50 - 200 parts by mass of said composite white pigment relative to 100 parts by mass of said resin. Furthermore, it is preferable that the first compound be a polymer of an unsaturated carboxylic acid and the second compound be an amine having one or more amino groups, and furthermore, it is preferable that the first compound be a polymerized carboxylic acid obtained by polymerizing linseed oil fatty acid or soybean oil fatty acid, or a polymerized carboxylic acid obtained by polymerizing linseed oil fatty acid or soybean oil fatty acid with acrylic acid, and the second compound be at least one type of amine selected from the group consisting of ethylenediamine, phenylenediamine, tetramethylenediamine, pentamethylenediamine, hexamethylenediamine, 1,12-dodecanediamine, alicyclic diamine, alicyclic triamine, alicyclic tetraamine, and alicyclic polyamine.

Furthermore, it is preferable that the flaky base material be configured of aluminum, and it is preferable that the first white pigment be TiO₂.

Furthermore, it is preferable that the subsurface hiding paint further include a second white pigment other than the composite white pigment. The present invention also relates to a painted article having a coating formed of the subsurface hiding paint described above.

### ADVANTAGEOUS EFFECT OF INVENTION

The present subsurface hiding paint significantly advantageously effectively presents excellent hiding power.

### DESCRIPTION OF EMBODIMENTS

Hereinafter, the present invention will be described in more detail.

### <Subsurface Hiding Paint>

The present subsurface hiding paint contains a composite white pigment and resin. The present subsurface hiding paint contains the composite white pigment as doing so is expected to allow the subsurface hiding paint to exhibit a white appearance and intended to reduce an effect in color on an overlying coating layer. As is also apparent from this object, the composite white pigment, and first and second white pigments, which will be described later, are "white" thoroughly conceptually, and do not exclude having colors such as light gray, light blue, light yellow and other light colors. It should be noted, however, that the present subsurface hiding paint can also be colored by containing other coloring pigments as below.

The present subsurface hiding paint as described above can contain any other components as long as the subsurface hiding paint contains both the composite white pigment and resin. Such other components can for example be additives such as a pigment dispersant, an antifoaming agent, an anti-settling agent and a curing catalyst and the like, other coloring pigments, a solvent, and the like.

The subsurface hiding paint suitably contains 50-200 parts by mass, preferably 100-140 parts by mass of the composite white pigment relative to 100 parts by mass of resin. When the subsurface hiding paint contains the composite white pigment in an amount less than 50 parts by mass, it may not present sufficient hiding power, and when the subsurface hiding paint contains the composite white pigment in an amount exceeding 200 parts by mass, its effect does not further change.

Furthermore, when the subsurface hiding paint can contain other components in any mounts allowing the present invention to exhibit its effect.

The present subsurface hiding paint is applied to hide a base or an underlying layer applied on a surface thereof, and accordingly, it is applied directly on the base or to be adjacent thereto, and normally on a layer of the subsurface hiding paint one or more overlying coating layers will be provided to configure a final painted article.

Note that, in the present invention, a visible-light transmittance of 0% indicates that an underlying material (i.e., a base or an underlying layer, as referred to above) is hidden for the sake of illustration. Note, however, that the visible-light transmittance of 0% is not necessarily a requirement for some applications.

### <Composite White Pigment>

The present subsurface hiding paint contains a composite white pigment including a flaky base material and a first white pigment adhering to the surface of the flaky base material. Thus the present subsurface hiding paint does not contain a flaky base material and a first white pigment individually, as a conventional undercoating paint does; rather, the present subsurface hiding paint can contain a composite white pigment having a first white pigment adhering to the surface of a flaky base material to achieve drastically increased hiding power and have whiteness.

The present composite white pigment thus configured allows the flaky base material's hiding power and the first white pigment's whiteness to synergistically act to establish both high hiding power and whiteness significantly.

The composite white pigment as above preferably has the first white pigment adhering to the flaky base material in an amount of 1-200 parts by mass, more preferably 5-100 parts by mass relative to 100 parts by mass of the flaky base material. The amount of the first white pigment allowed to adhere to the flaky base material can be adjusted as appropriate depending on the specific surface area of the flaky base material. When the first white pigment adheres in an amount less than 1 part by mass, the finally obtained composite white pigment may not be able to attain sufficient whiteness, whereas when the first white pigment adheres in an amount more than 200 parts by mass, it may contribute in the production process to increased viscosity or the like and hence result in significantly impaired workability.

The composite white pigment as above suitably has an average particle size of 1-100 µm, preferably 5-50 µm, more preferably 5-20 µm. When the average particle size is less than 1 µm, it may contribute in the production process to increased viscosity or the like and hence result in significantly impaired workability, whereas when the average particle size is more than 100 µm, it may result in a coating having a surface impaired in smoothness. When the present subsurface hiding paint is used as that for automobiles in particular, an average particle size of 20 µm or less is preferable as it allows a coating reduced in thickness to still have a smooth surface. In the present invention, an average particle size refers to a volumetrically averaged particle size which is determined by calculating a volumetric average based on a particle size distribution measured by a publicly known particle size distribution measurement method such as laser diffractometry.

Herein, how the first white pigment adheres to the surface of the flaky base material is not particularly limited, and it can do so through physical adsorption via van der Waals force, electric charge or the like, chemical absorption via another compound, or the like. Inter alia, it is preferable that the first white pigment adhere to the surface of the flaky base material in the coexistence of a first compound and a second compound.

The first compound is a compound having two or more carboxyl groups, and is essentially an acid. On the other hand, the second compound is a compound having one or more amino groups, and is essentially a base. Accordingly, when the first compound and the second compound are previously adhered to the surface of the flaky base material and that of the first white pigment, respectively, and thus mixed together, acid and base form salt and accordingly, aggregation rapidly occurs, and it may impossible to allow the first white pigment to selectively adhere to the surface of the flaky base material.

In contrast, it has been found that when the first white pigment is adhered to the surface of the flaky base material in the coexistence of the first compound and the second compound, surprisingly, such aggregation does not occur at all and the first white pigment strongly adheres to the surface of the flaky base material. The details of this mechanism are unknown; however, it is presumed that the first compound and the second compound aggregate in a micro state, and before the aggregation becomes a macro aggregation, the aggregation deposits on the surface of the flaky base material, and this deposition proceeds while taking the first white pigment into it, and consequently the first white pigment strongly adheres to the surface of the base material by the action of the first compound and the second compound.

Accordingly, in the present invention, the first white pigment adhering to the surface of the flaky base material does not necessarily mean only that the first white pigment and the flaky base material are in direct contact with each other, but may also mean that the first white pigment adheres to the flaky base material with another compound such as the first compound and/or the second compound interposed therebetween. Therefore, the expression that the first white pigment "adheres to the surface of the flaky base material in the coexistence of the first compound and the second compound" encompasses both of the following physical states: a state in which the first white pigment is in direct contact with and adheres to the flaky base material, and a state in which the first white pigment adheres to the flaky base material with the first compound and/or the second compound interposed therebetween. In the present invention, it is believed that normally, a plurality of first white pigments adhere to the surface of a single piece of the flaky base material, and that the first compound and the second compound exist on the flaky base material with or without the first white pigment interposed therebetween.

The first compound as above is a compound having two or more carboxyl groups, as set forth above, and acts with a second compound, which will be described hereinafter, synergistically to have an action of allowing the first white pigment to adhere to the surface of the flaky base material. The compound used as the first compound is not particularly limited as long as it is a compound having two or more carboxyl groups, and the upper limit of the number of carboxyl groups in a molecule is not particularly limited.

As the first compound, a carboxylic acid having two or more carboxyl groups is preferred, and a carboxylic acid having at least one double bond and two or more carboxyl groups, or a polymer thereof, or a dibasic acid is more preferred. Further, as such a polymer, a polymer of an unsaturated carboxylic acid is preferred, and a thermally polymerized carboxylic acid is particularly preferred. The thermally polymerized carboxylic acid refers to a carboxylic acid having one or more double bonds and two or more carboxyl groups, which is obtained by thermally polymerizing one or more types of carboxylic acids having a double bond.

Examples of the starting material of the polymer of the unsaturated carboxylic acid may include 3-octenoic acid, 10-undecenoic acid, oleic acid, linoleic acid, elaidic acid, acrylic acid and linolenic acid, which are compounds each having a double bond and a carboxyl group; and tall oil fatty acid, palm oil fatty acid, rice bran oil fatty acid, linseed oil fatty acid and soybean oil fatty acid, which are industrially supplied fatty acid mixtures, and these may be used singly, or may be used in combination of two or more thereof.

More preferable examples of the polymer of the unsaturated carboxylic acid may include a polymerized carboxylic acid obtained by polymerizing linseed oil fatty acid or soybean oil fatty acid, a polymerized carboxylic acid obtained by polymerizing linseed oil fatty acid or soybean oil fatty acid with acrylic acid, a polymerized carboxylic acid obtained by polymerizing tall oil fatty acid, and the like, and particularly may include a thermally polymerized carboxylic acid obtained by thermally polymerizing linseed oil fatty acid or soybean oil fatty acid, a thermally polymerized carboxylic acid obtained by thermally polymerizing linseed oil fatty acid or soybean oil fatty acid with acrylic acid, and the like.

Examples of a commercially available product of the polymerized carboxylic acid may include HARIDIMER 200, HARIDIMER 300, DIACID 1550 (trade names, produced by Harima Chemicals Group, Inc.), Pripol 1017 (trade name, produced by Uniqema B.V.), Empol 1008 (trade name, produced by Cognis Corporation), Unidyme 27 (trade name, produced by Arizona Chemical Company, LLC.), Bersadime 216 (trade name, produced by Henkel Japan Ltd.) and the like.

The dibasic acid is preferably at least one dibasic acid selected from the group consisting of hexanedioic acid, heptanedioic acid, octanedioic acid, nonanedioic acid, decanedioic acid, phthalic acid, isophthalic acid, terephthalic acid, acetone dicarboxylic acid, dodecanedioic acid, eicosanoic diacid, eicosadienoic diacid, ethyloctadecanedioic acid, dimethyleicosanoic diacid, octadecanedienedioic acid, isodocosadienoic diacid, isodocosanoic diacid, isoeicosadienoic diacid, butyloctanedioic acid, and dialkoxycarbonylisodocosadienoic diacid.

Here, the amount of the first compound contained in the composite white pigment varies depending on the surface area of the flaky base material to be used and the amount of the first white pigment to be used, but the amount is preferably 0.1-30 parts by mass, and in particular, more preferably 0.5-20 parts by mass with respect to 100 parts by mass of the flaky base material. An amount less than 0.1 parts by mass does not allow the first white pigment to adequately adhere to the surface of the flaky base material, and an amount more than 30 parts by mass does not further improve such effect and may be economically disadvantageous.

The second compound is a compound having one or more amino groups, and acts with the first compound synergistically to have an action of allowing the first white pigment to adhere to the surface of the flaky base material.

The compound used as the second compound is not particularly limited as long as it is a compound having one or more amino groups, and the upper limit of the number of amino groups in a molecule is not particularly limited. As the second compound, an amine having one or more amino groups is particularly preferred. The reason for this is to allow the first white pigment to particularly strongly adhere to the surface of the flaky base material. The amino group referred to in the present invention refers to a monovalent functional group obtained by removing hydrogen from ammonia, a primary amine or a secondary amine.

The amine having one or more amino groups as described above is preferably an amine having two or more amino groups. More specifically, examples thereof may include at least one type of amine selected from the group consisting of ethylenediamine, phenylenediamine, tetramethylenediamine, pentamethylenediamine, hexamethylenediamine, 1,12-dodecanediamine, alicyclic diamine, alicyclic triamine, alicyclic tetraamine, and alicyclic polyamine (the number of amino groups is five or more).

Here, the amount of the second compound contained in the composite white pigment varies depending on the surface area of the flaky base material to be used and the amount of the first white pigment to be used, but the amount is preferably 0.1-30 parts by mass, and in particular, more preferably 0.5-20 parts by mass with respect to 100 parts by mass of the flaky base material. An amount less than 0.1 parts by mass does not allow the first white pigment to adequately adhere to the surface of the flaky base material, and an amount more than 30 parts by mass causes aggregation and may not be able to allow the first white pigment to adequately adhere to the surface of the flaky base material.

### <Flaky Base Material>

The present composite white pigment contains a flaky base material configured of any of a metal, a metal-covered material and a carbon material. Note that being "flaky" is not limited in particular as long as it is recognized as being flaky in geometry.

The flaky base material's average thickness is not particularly limited; however, it is preferably 0.02 µm or more, and particularly preferably 0.1 µm or more. Further, the average thickness is preferably 5 µm or less, and more preferably 2 µm or less. When the average thickness is 0.02 µm or more, it is advantageous in terms of ease of handling in the production process, and when the average thickness is 5 µm or less, it is advantageous in terms of an outer appearance of a paint composition such as a coating.

The metal can be exemplified by aluminum, zinc, silver, copper, iron, nickel, titanium and an alloy containing at least one of these metals (e.g., stainless steel (SUS), bronze, and the like) and the like. Inter alia, the present flaky base material is preferably configured of aluminum as it has a particularly high hiding power, and is inexpensive and in addition has a small specific gravity and is thus easy to handle.

The metal covered material can be exemplified by inorganic compound particles (glass, mica, and alumina or titania or other similar ceramic particles or the like) each having a surface plated or similarly covered with the above exemplified metals. In that case, the metal is formed in layers and is obviously distinguished from the first white pigment, which is particulate, as will be described hereinafter. Furthermore, mica or similar inorganic compound particles can be used as the present flaky base material when the inorganic compound particles are covered with the metal as described above, and when the inorganic compound is not covered with the metal (i.e., when mica or the like is used alone), it provides low hiding power, and thus cannot be used as the present flaky base material.

The carbon material can be exemplified by graphite, graphene and the like. The carbon material may be covered with the metals exemplified above.

Further, the flaky base material's average particle size is preferably 1 µm or more, and more preferably 5 µm or more, in particular. Further, the average particle size is preferably 100 µm or less, more preferably 50 µm or less, and still more preferably 20 µm or less. An average particle size of 1 µm or more allows handleability in the production process and in general presents a tendency to less aggregate, and an average particle size of 100 µm or less can prevent a paint including the flaky base material from providing a coating having a rough surface. When the present subsurface hiding paint is used as that for automobiles in particular, an average particle size of 20 µm or less is preferable as it allows a coating reduced in thickness to still have a smooth surface.

Moreover, the flaky base material's average thickness is not particularly limited as long as it presents such an aspect ratio as above; however, it is preferably 0.02 µm or more, and particularly preferably 0.1 µm or more. Further, the average thickness is preferably 5 µm or less, and more preferably 2 µm or less. An average thickness of 0.02 µm or more is advantageous in handleability in the production process, and an average thickness of 5 µm or less is advantageous as it can provide a coating with better appearance. Note that the average particle size is calculated by calculating its volumetric average based on a particle size distribution measured by a publicly known particle size distribution measurement method such as laser diffractometry, as has been set forth above. Furthermore, the average thickness is calculated from the flaky base material's hiding power and density.

Note that the flaky base material may have a surface previously processed, as appropriate, with an inorganic compound or an organic compound to be waterproof, chemical proof, weatherproof and the like. In particular, when the flaky base material is formed of aluminum, which is reactable to water, acid, and alkali, it is preferable for some cases that the flaky base material be processed as described above.

### <First White Pigment>

The present first white pigment adheres to the surface of the flaky base material as described above and is particulate. Herein, being particulate means being different from a covering material provided in successive layers to cover a surface of the flaky base material, as seen in a conventional pearl pigment, and as long as it has this meaning, it is not limited to any particular shape. Although what mechanism works is unknown, possibly the first white pigment adheres to the flaky base material with the first compound and/or the second compound between the flaky base material and the first white pigment and accordingly, the first white pigment adheres in a particulate from to the surface of the flaky base material and thus allows a drastically higher hiding power than a conventional covering material in layers. In other words, the present invention is characterized in that the first white pigment that presents a particulate form adheres to the surface of the flaky base material.

Preferably, the present first white pigment as above is one or more selected from barium sulfate, magnesium oxide, calcium carbonate, silica, mica, titanium oxide, and aluminum oxide. That is, the present first white pigment can be of one type alone or two or more types in combination to adhere to the surface of the flaky base material.

Furthermore, preferably, the present first white pigment is titanium oxide (TiO₂) among the above examples. This is because titanium oxide has a particularly excellent whiteness.

Note that the first white pigment has an average particle size that is not particularly limited; however, it is preferably 0.01-2 µm, and more preferably 0.01-1 µm. A particle size of 0.01 µm or more reduces a risk of making it difficult to disperse the first white pigment, and a particle size of 2 µm or less reduces a risk of making it difficult to cause the first white pigment to uniformly adhere to the surface of the flaky base material.

### <Protective Layer>

The present composite white pigment can have a surface with a protective layer formed thereon. The protective layer can cover the composite white pigment's surface entirely or partially to further enhance the first white pigment's adhesion. The protective layer more preferably covers the composite white pigment's surface entirely.

The protective layer is preferably composed of a resin obtained by subjecting a monomer and/or an oligomer having at least one polymerizable double bond to radical polymerization, or an oxide or a hydroxide of at least one element selected from the group consisting of Al, Si, Ti, Cr, Zr, Mo, and Ce.

### <Second White Pigment>

The present subsurface hiding paint can further include a second white pigment other than the above composite white pigment. The second white pigment is different from the first white pigment in that the former does not adhere to the surface of the flaky base material. In other words, the second white pigment does not adhere to the surface of the flaky base material and is contained alone in the subsurface hiding paint.

The second white pigment as above is similar to the first white pigment in chemical composition, and can be of one type alone or two or more types in combination to be contained in the subsurface hiding paint. The second white pigment is also similar in geometry to the first white pigment.

When the present subsurface hiding paint contains the second white pigment, the subsurface hiding paint is not limited in in what amount the subsurface hiding paint contains the second white pigment, and the subsurface hiding paint can contain 100-1,000 parts by mass of the second white pigment relative to 100 parts by mass of the composite white pigment. Adding the second white pigment can effectively maintain whiteness and allows the paint to be applied to provide a coating reduced in thickness to achieve reduced cost.

The second white pigment has an average particle size that is not particularly limited; however, it is preferably 0.01-2 µm, and more preferably 0.01-1 µm. A particle size of 0.01 µm or more reduces a risk of making it difficult to disperse the second white pigment, and a particle size of 2 µm or less reduces a risk of providing a coating having a surface impaired in smoothness.

### <Resin>

The resin contained in the present subsurface hiding paint is not limited to any particular resin, and conventionally known resin used for this type of application can be used without any particular limitation.

The resin can be exemplified by thermosetting acrylic resin/melamine resin, thermosetting acrylic resin/CAB (cellulose acetate butyrate)/melamine resin, thermosetting polyester (alkyd) resin/melamine resin, thermosetting polyester (alkyd)/CAB/melamine resin, isocyanate-curable urethane resin/cold setting acrylic resin, water-dilutable acrylic emulsion/melamine resin and the like.

### <Other Components>

The present subsurface hiding paint can contain any other components as aforementioned, as long as the subsurface hiding paint contains the composite white pigment and resin.

One such other component is for example a solvent, and it may be any conventionally known solvent used for this type of application. For example, it can be exemplified by water, an alcohol-based, glycol-based, ketone-based or ester-based hydrophilic solvent (e.g., methyl alcohol, ethyl alcohol, isopropyl alcohol, n-propyl alcohol, t-butyl alcohol, n-butyl alcohol, isobutyl alcohol, ethyl cellosolve, butyl cello solve, butyl carbitol, propylene glycol monobutyl ether, propylene glycol monomethyl ether, dipropylene glycol monomethyl ether, propylene glycol monopropyl ether, acetone, ethyl acetate or propyl acetate), or an oil-based solvent such as an aromatic, alicyclic, or hydrocarbon-based solvent (e.g., benzene, toluene, xylene, hexane, heptane, cyclohexane, octane or mineral spirit).

Note that the solvent can be contained in an amount of 100-140 parts by mass relative to 100 parts by mass of the resin contained in the subsurface hiding paint.

### <Production Method>

The composite white pigment that is used in the present subsurface hiding paint may be produced in any method as long as the composite white pigment is configured as described above.

For example, it can be produced by mixing the flaky base material, the first compound, the second compound, and the first white pigment. In that case, the flaky base material, the first compound, the second compound, and the first white pigment may be mixed in any order, and the order of mixing these components is not particularly limited. For example, all the components may be added at once and mixed together, or the components may be added one-by-one and thus mixed together. Further, the first white pigment may be added as it is, or may be dispersed by a dispersing machine and thereafter added.

In the mixing, it is preferred to use a solvent in order to disperse or dissolve each component. The mixing may be conducted in a slurry state with a stirrer or the like used, or may be conducted in a paste state with a kneading machine such as a kneader mixer used.

Furthermore, the composite white pigment can for example be produced in a method other than the above described production method, as follows: the first white pigment is dispersed in a nonpolar solvent in the existence of an amino compound (e.g., a compound, such as the second compound, having one or more amino groups) or in the existence of that amino compound and aluminum or a titanium chelate compound to produce a covering layer formed of an amino compound which has two amino groups on a surface of the first white pigment in a molecule and does not have any carboxyl group or a covering layer formed of that amino compound and aluminum or the titanium chelate compound to thus produce a dispersion of the first white pigment that is surface-processed, and thereafter the flaky base material is added to the dispersion of the surface-processed, first white pigment and mixed therewith to cause the surface-processed, first white pigment to adhere to a surface of the flaky base material.

Furthermore, the composite white pigment can alternatively be produced, as follows: a specific compound acting to cause the first white pigment and the flaky base material to adhere to each other, e.g., a carboxylic acid, such as the first compound, that is a compound having two or more carboxyl groups, that is obtained by thermally polymerizing one or more types of carboxylic acids having a double bond to have one or more double bonds and two or more carboxyl groups, and the flaky base material are stirred in an organic solvent and then filtered to provide a cake thereof or unfiltered and thus presented in the form of a slurry, and the cake or the slurry and the first white pigment are kneaded or stirred in the existence of an organic solvent and thus mixed together to cause the first white pigment to adhere to a surface of the flaky base material.

Furthermore, the composite white pigment can alternatively be produced, as follows: a specific compound acting to cause the first white pigment and the flaky base material to adhere to each other, that is an organic compound having a phosphate group, and the flaky base material are stirred in an organic solvent and then filtered to provide a cake thereof or unfiltered and thus presented in the form of a slurry, and the cake or the slurry and the first white pigment are kneaded or stirred in the existence of an organic solvent and thus mixed together to cause the first white pigment to adhere to a surface of the flaky base material.

The composite white pigment thus obtained is further dispersed in an organic solvent and thus stirred, as desired, while a radically polymerizable unsaturated carboxylic acid is added thereto, and subsequently, a monomer having three or more radically polymerizable double bonds and a polymerization initiator are added thereto to provide polymerization and thereby the organic solvent that is excessive is removed to provide a resin coating on a surface of the composite white pigment.

By using the composite white pigment thus produced, the present subsurface hiding paint can be produced in any conventionally known preparation methods without particular limitation.

### <Painted Article>

The present invention also relates to a painted article having a coating formed of the subsurface hiding paint described above (i.e., a layer of the subsurface hiding paint). As has been previously discussed, the present subsurface hiding paint is applied to hide a base or an underlying layer applied on a surface of the base, and accordingly, it is applied directly on the base or to be adjacent thereto, and normally on the layer of the subsurface hiding paint one or more overlying coating layers will be provided to configure a final painted article.

Note that the base that configures the present painted article may include, but is not limited to, metals, plastics or other organic materials, concrete, ceramics or other inorganic materials, paper, wood, and the like. Furthermore, the base is not limited in geometry, either, and includes automobiles, vehicles, marine vessels, bridges, steel towers, buildings and other stereoscopic structures, plate, foil, paper, cloth, film and other planar items, and the like.

Furthermore, when the subsurface hiding paint is used to provide a coating (i.e., the subsurface hiding paint layer), the coating is not limited in thickness, and for example even a thickness of 15-25 µm allows the coating to exhibit sufficient hiding power. This indicates that the present coating having a small thickness nonetheless exhibits excellent hiding power in contrast to a conventional substrate hiding layer of this type requiring a thickness of 35-45 µm. Note that such a coating can provide an L* value of 80 or more, as measured with a multi-angle spectrocolorimeter (trade name: "X-Rite MA-68II" produced by X-Rite) (Note that the L* value represents a coating's whiteness (or lightness) and larger numerical values indicate higher whiteness (or lightness).).

The present subsurface hiding paint can be applied on a base in conventionally known methods without particular limitation and it can be applied in any method.

Note that between a coating formed of the present subsurface hiding paint and a base, there may be provided a coating formed of a white paint which does not contain the present composite white pigment, as desired.

### Examples

Hereinafter, the present invention will be described in more detail by way of examples; however, the present invention is not limited thereto.

### <Inventive Example 1>

### <Producing Composite White Pigment>

300 ml of mineral spirit was put into a three-necked flask, and to this were added 153.8 g of aluminum particles (trade name: "Aluminum paste CS420" (metal content: 65%, average particle size: 8 µm), produced by Toyo Aluminum K.K.) as a flaky base material, and 20.0 g of a polymerized carboxylic acid (trade name: "DIACID 1550", produced by Harima Chemicals Group, Inc.), which was obtained by thermally polymerizing acrylic acid with soybean oil fatty acid, as the first compound. The resulting mixture was heated and stirred, and thereafter cooled to normal temperature, and then filtered and thus degreased. Thereby, a flaky base material degreased with the first compound was obtained.

Then, 400 ml of mineral spirit as a solvent, 70.0 g of TiO₂ (trade name: "CR-90-2", average particle size: 0.25 µm, produced by Ishihara Sangyo Kaisya Ltd.) as the first white pigment, 200.0 g of the degreased flaky base material as above, 20.0 g of the same first compound as above, and 20.0 g of an alicyclic polyamine (trade name: Adekastab LA-67, produced by ADEKA Corporation) as the second compound were charged into a kneader and stirred at a temperature of 0 to 150 degrees centigrade for 1 minute to 1 hour, and thereby, a slurry containing a composite white pigment having the first white pigment adhering to a surface of the flaky base material in the coexistence of the first compound and the second compound, was obtained.

Subsequently, 640 g of the slurry containing the composite white pigment that is obtained as above was put into a three-necked flask containing 1,000 ml of mineral spirit, 1.0 g of acrylic acid was further added thereto, and the resulting mixture was stirred. Then, a solution obtained by dissolving 30.0 g of trimethylolpropane trimethacrylate in 150 ml of mineral spirit, and a solution obtained by dissolving 10.0 g of azobisisobutyronitrile in 150 ml of mineral spirit were added to the mixture. The resulting mixture was heated (at 50 to 150 degrees centigrade) and stirred (for 30 minutes to 8 hours), cooled to normal temperature, and filtered to give the composite white pigment of the present invention having a surface provided with a protective layer composed of resin.

### <Preparing Base Paint>

67.0 g of a paint resin (trade name: "ACRIC No. 2000 Clear" produced by Kansai Paint Co., Ltd.), and 120 parts by weight (phr) of the second white pigment of TiO₂ (trade name: "TIPAQUE CR-50" (average particle size: 0.25 µm) produced by Ishihara Sangyo Kaisha, Ltd.) per 100 parts by weight of the resin component of the paint resin were introduced into a pot mill having stainless steel bottle with 2 mm zirconia beads therein, and the pot mill was rotated at 40 rpm for 3 hours to grind the mixture to obtain a base paint.

### <Preparing Subsurface Hiding Paint>

Ten parts by weight (phr) of the above obtained composite white pigment was introduced into the above obtained base paint per 100 parts by weight of the resin in the base paint and uniformly stirred by a stirrer to provide a subsurface hiding paint.

### <Producing Painted Article>

The above obtained subsurface hiding paint was discharged via an automatic spray gun in an amount of 200 cc with an atomization pressure of 3.0 kgf/cm² at a distance of 30 cm in a booth having a temperature of 27 degrees centigrade and a humidity of 45%, and the subsurface hiding paint was thus applied to bases that are film and a hiding power test paper to obtain a painted article having the base with a coating of the subsurface hiding paint thereon.

The coating had a thickness of 25 µm, and the coating, as measured on the film (or base), had a visible-light transmittance of 0%. The coating, as measured on the hiding power test paper (or base), presented an X-rite L* value of equal to or greater than 87 (see the table 1 below).

**Table 1**

| | Thickness of Coating (µm) | 2nd White Pigment (phr) | Composite White Pigment (phr) | L* Value | | | | | Visible Light Transmittance (%) |
|---|---|---|---|---|---|---|---|---|---|
| | | | | Measurement Angle | | | | | |
| | | | | 15° | 25° | 45° | 75° | 110° | |
| Inventive ex. 1 | 25 | 120 | 10 | 89.2 | 88.2 | 87.4 | 88.4 | 87.9 | 0 |
| Inventive ex. 2 | 15 | 120 | 20 | 90.2 | 85.2 | 82.6 | 83.3 | 81.9 | 0 |
| Inventive ex. 3 | 25 | 120 | 10 | 91.7 | 87.4 | 85.3 | 85.9 | 84.3 | 0 |
| Inventive ex. 4 | 25 | 120 | 10 | 88.0 | 86.9 | 85.8 | 86.5 | 85.7 | 0 |
| Comparative ex. 1 | 25 | 120 | - | 100.8 | 97.3 | 95.7 | 96.1 | 94.1 | 4.8 |
| Comparative ex. 2 | 25 | 120 | 10 (1st white pigment) | 101.8 | 97.9 | 96.1 | 96.4 | 94.5 | 4.2 |
| Comparative ex. 3 | 25 | 120 | 10 (flaky base material) | 83.2 | 81.1 | 79.2 | 80.1 | 79.2 | 0 |
| Comparative ex. 4 | 25 | 120 | 10 (mica) | 100.9 | 97.5 | 95.9 | 96.3 | 94.4 | 4.0 |

Note that the L* value was measured with a multi-angle spectrocolorimeter (trade name: "X-Rite MA-68II" manufactured by X-Rite Inc.) at measurement angles indicated in Table 1. Higher L* values indicate higher whiteness (or lightness). Furthermore, visible-light transmittance was measured with transmittance measurement device (trade name: "Z-1001DP" produced by Nippon Denshoku, Industries Co., LTD). Visible-light transmittance having smaller values indicates higher hiding power. Furthermore, the coating was measured in thickness with an electromagnetic thickness gage (trade name: "LE-300J" produced by Kett Electric Laboratory).

### <Inventive Example 2>

A painted article having a base with a coating thereon formed of a subsurface hiding paint was obtained in the same manner as inventive example 1, except that the subsurface hiding paint contains the composite white pigment in an amount of 20 phr and the coating had a thickness of 15 µm. The obtained coating's visible light transmittance and X-rite L* value were measured similarly as done in inventive example 1. The results are shown in Table 1.

### <Inventive Example 3>

A painted article having a base with a coating thereon formed of a subsurface hiding paint was obtained in the same manner as inventive example 1, except that 20.0 g of the second compound of alicyclic polyamine was replaced with 20.0 g of ethylamine. The obtained coating's visible light transmittance and X-rite L* value were measured similarly as done in inventive example 1. The results are shown in Table 1.

### <Inventive Example 4>

A painted article having a base with a coating thereon formed of a subsurface hiding paint was obtained in the same manner as inventive example 1, except that 20.0 g of the second compound of alicyclic polyamine was replaced with 20.0 g of hexamethylenediamine. The obtained coating's visible light transmittance and X-rite L* value were measured similarly as done in inventive example 1. The results are shown in Table 1.

### <Comparative Example 1>

A painted article having a base with a coating thereon formed of a subsurface hiding paint was obtained in the same manner as inventive example 1, except that the subsurface hiding paint did not contain the composite white pigment. The obtained coating's visible light transmittance and X-rite L* value were measured similarly as done in inventive example 1. The results are shown in Table 1.

### <Comparative Example 2>

A painted article having a base with a coating thereon formed of a subsurface hiding paint was obtained in the same manner as inventive example 1, except that the subsurface hiding paint had the composite white pigment replaced with 10 phr of the first white pigment used in inventive example 1. The obtained coating's visible light transmittance and X-rite L* value were measured similarly as done in inventive example 1. The results are shown in Table 1.

### <Comparative Example 3>

A painted article having a base with a coating thereon formed of a subsurface hiding paint was obtained in the same manner as inventive example 1, except that the subsurface hiding paint had the composite white pigment replaced with 10 phr of the flaky base material used in inventive example 1. The obtained coating's visible light transmittance and X-rite L* value were measured similarly as done in inventive example 1. The results are shown in Table 1.

### <Comparative Example 4>

A painted article having a base with a coating thereon formed of a subsurface hiding paint was obtained in the same manner as inventive example 1, except that the subsurface hiding paint had the composite white pigment replaced with 10 phr of mica (trade name: Iriotec 8800 produced by Merck Co.). The obtained coating's visible light transmittance and X-rite L* value were measured similarly as done in inventive example 1. The results are shown in Table 1.

As is apparent from Table 1, the inventive examples provided subsurface hiding paints allowing coatings to be provided therefrom with larger hiding power than the comparative examples' coatings. It has thus been confirmed that the subsurface hiding paint of the present invention has excellent hiding power.

As described above, the embodiments and examples of the present invention have been described; however, appropriate combinations of the constitutions of the respective embodiments and examples are also originally considered.

It should be understood that the embodiments and examples disclosed herein are illustrative and non-restrictive in any aspects. The scope of the present invention is defined by the terms of the claims, rather than the description above, and is intended to include any modifications within the meaning and scope equivalent to the terms of the claims.

## Claims

1. A subsurface hiding paint comprising a composite white pigment and resin,
said composite white pigment including a flaky base material and a first white pigment adhering to a surface of said flaky base material,
said flaky base material being configured of any of a metal, a metal-covered material and a carbon material,
said first white pigment being particulate,
said first white pigment adhering to the surface of said flaky base material in coexistence of a first compound and a second compound,
said first compound being a compound having two or more carboxyl groups,
said second compound being a compound having one or more amino groups,
said subsurface hiding paint containing 50 - 200 parts by mass of said composite white pigment relative to 100 parts by mass of said resin.

2. The subsurface hiding paint according to claim 1, wherein:
said first compound is a polymer of an unsaturated carboxylic acid; and
said second compound is an amine having one or more amino groups.

3. The subsurface hiding paint according to claim 2, wherein:
said first compound is a polymerized carboxylic acid obtained by polymerizing linseed oil fatty acid or soybean oil fatty acid, or a polymerized carboxylic acid obtained by polymerizing linseed oil fatty acid or soybean oil fatty acid with acrylic acid; and
said second compound is at least one type of amine selected from the group consisting of ethylenediamine, phenylenediamine, tetramethylenediamine, pentamethylenediamine, hexamethylenediamine, 1,12-dodecanediamine, alicyclic diamine, alicyclic triamine, alicyclic tetraamine, and alicyclic polyamine.

4. The subsurface hiding paint according to any one of claims 1, 2 and 3, wherein said flaky base material is configured of aluminum.

5. The subsurface hiding paint according to any one of claims 1 to 4, wherein said first white pigment is TiO₂.

6. The subsurface hiding paint according to any one of claims 1 to 5, further comprising a second white pigment other than said composite white pigment.

7. A painted article having a coating formed of the subsurface hiding paint according to any one of claims 1 to 6.

## Patentansprüche

1. Farbe zur Verbergung einer Unteroberfläche umfassend ein zusammengesetztes weißes Pigment und Harz,
wobei das zusammengesetzte weiße Pigment ein flockiges Grundmaterial und ein erstes weißes Pigment enthält, welches an einer Oberfläche des flockigen Grundmaterials haftet,
wobei das flockige Grundmaterial aus jedwedem Metall, einem metallbeschichteten Material und einen Kohlenstoffmaterial hergestellt ist,
wobei das erste weiße Pigment partikelförmig ist,
wobei das erste weiße Pigment an der Oberfläche des flockigen Grundmaterials haftet in Koexistenz mit einer ersten Verbindung und einer zweiten Verbindung,
wobei die erste Verbindung eine Verbindung mit zwei oder mehr Carboxygruppen ist,
wobei die zweite Verbindung eine Verbindung mit einer oder mehr Aminogruppen ist,
wobei die Farbe zur Verbergung einer Unteroberfläche 50 - 200 Masseteile des zusammengesetzten weißen Pigments enthält, bezogen auf 100 Masseteile des Harzes.

2. Farbe zur Verbergung einer Unteroberfläche nach Anspruch 1, wobei:
die erste Verbindung ein Polymer einer ungesättigten Carboxysäure ist; und
die zweite Verbindung ein Amin mit einer oder mehr Aminogruppen ist.

3. Farbe zur Verbergung einer Unteroberfläche nach Anspruch 2, wobei:
die erste Verbindung eine polymerisierte Carboxysäure ist, die durch Polymerisation von Leinölfettsäure oder Sojaölfettsäure erhalten wird, oder eine polymerisierte Carboxysäure, die durch Polymerisation von Leinölfettsäure oder Sojaölfettsäure mit Acrylsäure erhalten wird; und
die zweite Verbindung mindestens eine eines Aminotyps ausgewählt aus der Gruppe bestehend aus Ethylendiamin, Phenylendiamin, Tetramethylendiamin, Pentamethylendiamin, Hexamethylendiamin, 1,12-Dodecandiamin, alizyklisches Diamin, alizyklisches Triamin, alizyklisches Tetraamin und alizyklisches Polyamin ist.

4. Farbe zur Verbergung einer Unteroberfläche nach einem der Ansprüche 1, 2 und 3, wobei das flockige Grundmaterial aus Aluminium hergestellt ist.

5. Farbe zur Verbergung einer Unteroberfläche nach einem der Ansprüche 1 bis 4, wobei das erste weiße Pigment TiO₂ ist.

6. Farbe zur Verbergung einer Unteroberfläche nach einem der Ansprüche 1 bis 5, welche des Weiteren außer dem zusammengesetzten weißen Pigment ein zweites weißes Pigment umfasst.

7. Ein gestrichener Gegenstand mit einer Beschichtung, die aus der Farbe zur Verbergung einer Unteroberfläche nach einem der Ansprüche 1 bis 6 gebildet ist.

## Revendications

1. Peinture de masquage de sous-surface comprenant un pigment blanc composite et une résine,
ledit pigment blanc composite comprenant un matériau de base feuilleté et un premier pigment blanc adhérant à une surface dudit matériau de base feuilleté,
ledit matériau de base feuilleté étant configuré de l'un quelconque d'un métal, d'un matériau recouvert de métal et d'un matériau de carbone,
ledit premier pigment blanc étant particulaire,
ledit premier pigment blanc adhérant à la surface dudit matériau de base feuilleté en coexistence avec un premier composé et un second composé,
ledit premier composé étant un composé ayant deux ou plus de deux groupes carboxyle,
ledit second composé étant un composé ayant un ou plusieurs groupes amino,
ladite peinture de masquage de sous-surface contenant 50 à 200 parties en masse dudit pigment blanc composite par rapport à 100 parties en masse de ladite résine.

2. Peinture de masquage de sous-surface selon la revendication 1, dans laquelle :
ledit premier composé est un polymère d'un acide carboxylique insaturé ; et
ledit second composé est une amine ayant un ou plusieurs groupes amino.

3. Peinture de masquage de sous-surface selon la revendication 2, dans laquelle :
ledit premier composé est un acide carboxylique polymérisé obtenu par polymérisation d'un acide gras d'huile de lin ou d'un acide gras d'huile de soja, ou un acide carboxylique polymérisé obtenu par polymérisation d'un acide gras d'huile de lin ou d'un acide gras d'huile de soja avec un acide acrylique ; et
ledit second composé est au moins un type d'amine choisi dans le groupe constitué par l'éthylènediamine, la phénylènediamine, la tétraméthylènediamine, la pentaméthylènediamine, l'hexaméthylènediamine, la 1,12-dodécanediamine, une diamine alicyclique, une triamine alicyclique, une tétraamine alicyclique et une polyamine alicyclique.

4. Peinture de masquage de sous-surface selon l'une quelconque des revendications 1, 2 et 3, dans laquelle ledit matériau de base feuilleté est configuré d'aluminium.

5. Peinture de masquage de sous-surface selon l'une quelconque es revendications 1 à 4, dans laquelle le premier pigment blanc est TiO₂.

6. Peinture de masquage de sous-surface selon l'une quelconque des revendications 1 à 5, comprenant en outre un second pigment blanc différent dudit pigment blanc composite.

7. Article peint ayant un revêtement formé de la peinture de masquage de sous-surface selon l'une quelconque des revendications 1 à 6.
